# EUROPEAN PATENT APPLICATION

(11) **EP 2 595 326 A1**
(43) Date of publication of application: **22.05.2013**
(21) Application number: 13000715.6
(22) Date of filing: 05.11.2003
(51) Int. Cl.: H04B 7/216, H04W 36/18, H04W 24/00

(54) **Packet duplication**

(30) Priority: 21.01.2003 US 441577 P
(62) Divisional of application: 03779471.6
(71) Applicant: Qualcomm Incorporated, San Diego, CA 92121-1714 (US)
(72) Inventor: Corson, M. Scott, Chatham, NJ 07928 (US); Kapoor, Samir, Doylestown, PA 18901 (US); Laroia, Rajiv, Basking Ridge, NJ 07920 (US); Park, Vincent, Budd Lake, NJ 07828 (US)
(74) Representative: Wimmer, Hubert

(57) **Abstract**

The invention described herein enables a form of downlink macro-diversity in packet-switched cellular networks. It allows packets (650, 650', 652, 652', 654, 654', 656, 656', 658, 658', 660, 660', 662) to be selectively delivered from a network/internetwork to an end node (200), e.g., wireless communication device or terminal, over a set of available link-layer connections (402, 502) to/from the end node (200), through one or more access nodes (300, 300'), e.g., base stations. Downlink macro-diversity is particularly important when the link layer connections (402, 502) between the end node (200) and the corresponding access node (300, 300'), e.g., the access links, are subject to independent or partially correlated time variations in signal strength and interference. In accordance with the invention, the end node (200) dynamically selects a downlink (402, 502) to be used out of a set of available access links on a per packet basis subject to prevailing channel conditions, availability of airlink resources and other constraints. The invention improves the robustness and efficiency of communication, overall utilization of air-link resources, and quality of service experienced by the end node (200).

## Description

### FIELD OF THE INVENTION:

This invention relates to communication systems and, more particularly, to methods and apparatus for downlink macro-diversity in packet-switched cellular networks.

### BACKGROUND:

Existing CDMA-based cellular network technologies achieve what is often referred to as downlink macro-diversity through the use of the well-known "soft handoff" mechanism. In soft handoff mechanism, multiple copies of downlink frames at the link layer or Media Access Control (MAC) sublayer are sent in parallel from a base station controller element, which is typically centrally located in the radio access network, to multiple base stations transceivers, which subsequently simultaneously transmit the downlink frame copies to the user's wireless communication device or terminal. The wireless terminal then uses techniques such as frame selection or soft combining, as well as automatic repeat request (ARQ) mechanisms in an attempt to reconstruct and correctly receive the frames sent from the base station controller. This design has evolved primarily in support of circuit-switch applications, e.g., voice, and is not well-suited for packet-switched networking/internetworking. The design also imposes timing and synchronization requirements between the base station transceivers and/or between the base station controller and the base station transceivers.

These requirements are overly restrictive for many packet-switched network/internetwork technologies. In connectionless, packet-switched networks/internetworks such as those based on the Internet Protocol (IP), a sequence of packets between two end systems (or packet flow) need not follow the same path throughout the network/internetwork. It is also generally desirable to confine the dynamics of a specific air-link interface technology to the interface itself, thereby allowing network layer intelligence to be brought forward to the edge of the fixed infrastructure.

### Internet Protocol Overview

IP technology is designed to enable packet-switched interconnection of a heterogeneous set of computer communication networks. A potentially diverse set of network and link layer technologies are interconnected through gateways (or routers) that provide a packet forwarding service. Information is transferred from sources to destinations as blocks of data called datagrams, where sources and destinations (or hosts) are identified by fixed length addresses. Routing in IP internetworks is connectionless in nature, in that datagrams are forwarded between routers on a hop-by-hop basis using the destination address in the datagram. Each router makes an independent next-hop forwarding decision using its own internal forwarding table. IP also provides for fragmentation and reassembly of long datagrams, if necessary, for transmission through "small packet" networks. In some IP internetworks there is relatively little distinction between hosts and routers. Herein, when no distinction is required the term "node" will be used. One distinction that generally holds true is that while any IP node may send and receive datagrams, only routers forward datagrams.

### IP Internetworking over Wireless Communication and Networking Technologies

Connectivity between nodes in an IP internetwork can be provided by both wired and wireless communications and network technologies. Wireless communication and network technology can be used to provide connectivity either directly between IP nodes that have wireless communication device interfaces or through non-IP wireless link-layer devices, such as a wireless access point serving as a bridge between a wireless LAN and a hardwired LAN. In any case, channel conditions, spatial relationships, and other factors have a significant impact on physical and link layer connectivity, which makes these link connections more dynamic and time varying than in hardwired networks.

Before IP datagrams can be transmitted between two wireless communication devices, a viable link must be established. The process of establishing a wireless link may progress through a series of possible stages as follows.
1. In the first stage, which may be referred to as "physical layer synchronization", devices typically detect one another based on physical layer mechanisms and synchronize with one another to allow further communication.
2. In the second stage, which may be referred to as "physical layer access exchange", the devices typically exchange a series of physical layer signals or control messages to enable access to air-link resources. After this stage, the devices can send and receive link layer control messages.
3. In the third stage, which may be referred to as "link layer exchange", the devices typically exchange a series of link layer control messages. This may include tasks such as authentication, authorization, registration and establishment of keys for enciphering and deciphering link traffic. After this stage, the devices can send and receive network layer control and data traffic (thus, the link is capable of supporting the exchange of link layer data messages and IP datagrams).
4. In the fourth stage, which may be referred to as "network layer exchange", the devices typically exchange network and higher layer control messages. This may include tasks such as address resolution, network layer admission control, internetwork routing, and negotiating quality of service. Depending on the specifics of the network/internetwork scenario, various control traffic exchanges in this fourth stage may be required before exchange of general IP data traffic is supported (particularly data traffic that must traverse more than one network hop).

Note that some of the message exchanges may directly or indirectly involve entities such as Authentication, Authorization and Accounting (AAA) servers other than the wireless communication devices and the entities that encompass them (particularly in the third and fourth stages above).

With some wireless technologies, it is possible to simultaneously maintain connectivity with multiple wireless communication devices to obtain a variety of performance benefits. Given a wireless technology that supports multiple simultaneous link-layer connections, the wireless communication device may or may not be limited to only transmitting or receiving on one such connection at a time. In the context of a cellular network, such a technology enables a wireless terminal to maintain simultaneous link-layer connections with multiple base stations. In the context of IP internetworking, a wireless IP node could maintain simultaneous link-layer connections with multiple wireless access points or wireless access routers. This is possible even if the IP node has only a single wireless communication device or network interface card (NIC), and therefore would traditionally only have a single IP interface. It is also possible to develop a single NIC that supports simultaneous link-layer connections using multiple wireless communication and networking technologies.

### SUMMARY OF THE INVENTION:

The invention described herein enables a form of downlink macro-diversity in packet-switched cellular networks. It allows packets to be selectively delivered from a network/internetwork to an end node, e.g., wireless communication device or terminal, over a set of available connections, e.g., physical and/or link layer connections, to/from the end node, through one or more access nodes, e.g., base stations. This approach is consistent with a connectionless networking paradigm. The new approach to downlink macro-diversity is achieved in part, in some embodiments, through the introduction of innovative selective packet replication and forwarding agents that are strategically located, or placed, within the nework/internetwork, and are coupled together with fast and intelligent control and signaling mechanisms supported by the end node.

A cellular network architecture is particularly well suited for application of this invention, since an end node can typically communicate with other nodes, e.g., other end nodes and/or application server nodes, in the network/internetwork through any one of a set of available access links and/or access nodes.

Downlink macro-diversity can be important when the link-layer connections between the end node and the corresponding access node, e.g., the access links, are subject to independent or partially correlated time variations in signal strength and interference. The invention achieves downlink macro-diversity by enabling the end node to dynamically select the downlink to be used out of a set of available access links, e.g., on a per packet basis, subject to prevailing channel conditions, availability of air-link resources and/or other constraints. The invention improves the robustness and efficiency of communication, overall utilization of air-link resources, and quality of service experienced by the end node.

Numerous additional features benefits and embodiments of the present invention will be apparent in view of the detailed discussion which follows.

### BRIEF DESCRIPTION OF THE FIGURES:

Fig. 1 illustrates a network diagram of an exemplary communications system in which the invention is applicable.
Fig. 2 illustrates an exemplary end node implemented in accordance with the present invention.
Fig. 3 illustrates an exemplary access node implemented in accordance with the present invention.
Fig. 4 illustrates a flow of packets destined for an end node that is connected to only one access node as a basis for comparison and is the first of a set of five figures (4 through 8) that illustrate various signaling and operations performed in accordance with the present invention in the context of the Fig. 1 exemplary communication system.
Fig. 5 illustrates signaling and operations associated with replicating a flow of packets destined for an end node that is connected to multiple access nodes, in accordance with a first exemplary embodiment of the invention.
Fig. 6 illustrates signaling and operations associated with switching between replicated flows of packets destined for an end node that is connected to multiple access nodes, in accordance with a first exemplary embodiment of the invention.
Fig. 7 illustrates signaling and operations associated with replicating a flow of packets destined for an end node that is connected to multiple access nodes, in accordance with a second exemplary embodiment of the invention.
Fig. 8 illustrates signaling and operations associated with switching between replicated flows of packets destined for an end node that is connected to multiple access nodes, in accordance with a second exemplary embodiment of the invention.

### DETAILED DESCRIPTION OF THE FIGURES AND THE INVENTION:

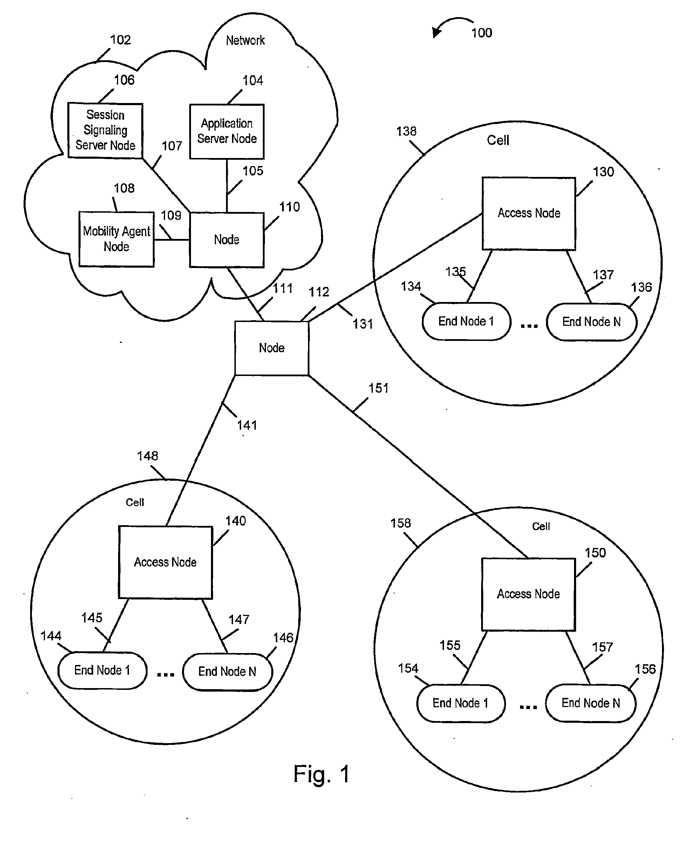

Fig. 1 illustrates an exemplary communication system 100, e.g., a cellular communication network, in which the invention is applicable. The exemplary communication system 100 comprises a plurality of nodes interconnected by communications links. Nodes in the exemplary communication system 100 may exchange information using signals, e.g., messages, based on communication protocols, e.g., IP. The communications links of the system 100 may be implemented, for example, using wires, fiber optic cables, and/or wireless communications techniques. The exemplary communication system 100 includes a plurality of end nodes 134, 136, 144, 146, 154, 156, which access the communication system via a plurality of access nodes 130, 140, 150. The end nodes 134, 136, 144, 146, 154, 156 may be, e.g., wireless communication devices or terminals, and the access nodes 130, 140, 150 may be, e.g., wireless access routers or base stations. The exemplary communication system 100 also includes a number of other nodes as may be needed to provide interconnectivity or to provide specific services or functions. Specifically, the exemplary communication system 100 includes a mobility agent node 108, e.g., Mobile IP home agent node, as may be needed to support mobility of end nodes between access nodes, a session signaling server node 106, e.g., SIP proxy server, as may be needed to support establishment and maintenance of communication sessions between end nodes, and an application server node 104, e.g., multimedia server, as may be needed to support specific application layer services.

The Fig. 1 exemplary system 100 depicts a network 102 that includes the application server node 104, the session signaling server node 106, and the mobility agent node 108, each of which is connected to an intermediate network node 110 by a corresponding network link 105, 107, 109, respectively. The intermediate network node 110 in the network 102 also provides interconnectivity to network nodes that are external from the perspective of the network 102 via network link 111. Network link 111 is connected to another intermediate network node 112, which provides further connectivity to a plurality of access nodes 130, 140, 150 via network links 131,141, 151, respectively.

Each access node 130, 140, 150 is depicted as providing connectivity to a plurality of N end nodes (134, 136), (144, 146), (154, 156), respectively, via corresponding access links (135, 137), (145, 147), (155, 157), respectively. In the exemplary communication system 100, each access node 130, 140, 150 is depicted as using wireless technology, e.g., wireless access links, to provide access. A radio coverage area, e.g., communications cell, 138, 148, 158 of each access node 130, 140, 150, respectively, is illustrated as a circle surrounding the corresponding access node.

The exemplary communication system 100 is subsequently used as a basis for the description of an embodiment of the invention. Alternative embodiments of the invention include various network topologies, where the number and type of network nodes, the number and type of links, and the interconnectivity between nodes may differ from that of the exemplary communication system 100 depicted in Fig. 1.

In accordance with the present invention, support for downlink macro-diversity in the exemplary system 100 is enabled by the following functional entities.
1. Selective Packet Replication Agent (SPRA): The SPRA provides support for selectively replicating a flow of packets and directing the replicated flows along separate paths, e.g., by tunneling the replicated flows to different intermediate nodes, in route to the final destination.
2. Selective Packet Forwarding Agent (SPFA): The SPFA provides support for selectively forwarding, buffering or discarding packets belonging to a particular flow.

In various embodiments of the present invention these functional entities may be located or placed at various points, or within various nodes, in the network. In some embodiments of the invention both SPRA and SPFA functional entities may be collocated, or combined, within the same network node. With respect to a packet flow, or set of packet flows, en route to a particular destination-a point, e.g., node, at which packets are replicated by a SPRA is referred to as the selective packet replication point (SPRP). Similarly, a point, e.g., node, at which packets belonging to a packet flow, or set of packet flows, are selectively forwarded, buffered, and/or discarded by a SPFA is referred to as the selective packet forwarding point (SPFP). In general, there may be multiple SPRPs and SPFPs affecting a particular packet flow, or set of packet flows, en route to a particular destination. Also, since an SPRA and SPFA may be collocated, or combined, within the same network node, it is possible for such a node to be both a SPRP and SPFP for a packet flow, or set of packet flows.

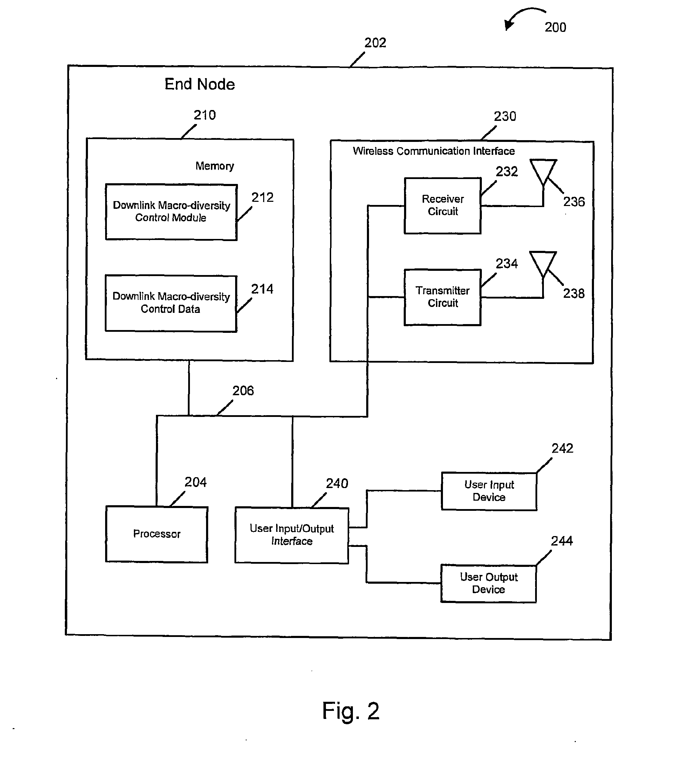

Fig. 2 provides a detailed illustration of an exemplary end node 200 implemented in accordance with the present invention. The exemplary end node 200, depicted in Fig. 2, is a detailed representation of an apparatus that may be used as any one of the end nodes 134, 136, 144, 146, 154, 156, depicted in Fig. 1. In the Fig. 2 embodiment, the end node 200 includes a processor 204, a wireless communication interface 230, a user input/output interface 240 and memory 210 coupled together by bus 206. Accordingly, via bus 206 the various components of the end node 200 can exchange information, signals and data. The components 204, 206, 210, 230, 240 of the end node 200 are located inside a housing 202.

The wireless communication interface 230 provides a mechanism by which the internal components of the end node 200 can send and receive signals to/from external devices and network nodes, e.g., access nodes. The wireless communication interface 230 includes, e.g., a receiver circuit 232 with a corresponding receiving antenna 236 and a transmitter circuit 234 with a corresponding transmitting antenna 238 used for coupling the end node 200 to other network nodes, e.g., via wireless communications channels. The end node 200 is capable of sending and receiving control signals and data traffic via the wireless communication interface 230 to/from multiple other nodes, e.g., access nodes, simultaneously. In some embodiments of the invention, the wireless communication interface 230 includes multiple baseband transceivers.

The exemplary end node 200 also includes a user input device 242, e.g., keypad, and a user output device 244, e.g., display, which are coupled to bus 206 via the user input/output interface 240. Thus, user input/output devices 242, 244 can exchange information, signals and data with other components of the end node 200 via user input/output interface 240 and bus 206. The user input/output interface 240 and associated devices 242, 244 provide a mechanism by which a user can operate the end node 200 to accomplish certain tasks. In particular, the user input device 242 and user output device 244 provide the functionality that allows a user to control the end node 200 and applications, e.g., modules, programs, routines and/or functions, that execute in the memory 210 of the end node 200.

The processor 204 under control of various modules, e.g., routines, included in memory 210 controls operation of the end node 200 to perform various signaling and processing tasks as discussed below. The modules included in memory 210 are executed on startup or as called by other modules. Modules may exchange data, information, and signals when executed. Modules may also share data and information when executed. In the Fig 2 embodiment, the memory 210 of end node 200 of the present invention includes a downlink macro-diversity control module 212 and downlink macro-diversity control data 214.

The downlink macro-diversity control module 212 controls the operation of the end node 200 associated with replication of downlink packet flows and switching between multiple replicated downlink packet flows when the end node 200 has multiple simultaneous link-layer connections, e.g., access links, to one or more access nodes. Note that an end node may have simultaneous link-layer connections in two or more cells/sectors supported by the same access node, or different access nodes. In particular, the downlink macro-diversity control module 212 controls processing associated with monitoring the status of link-layer connections, assessing the relative performance or quality of available link-layer connections, and sending/receiving signals, e.g., messages, to coordinate the selective replication of downlink packet flows with SPRAs and/or selective forwarding of packet flows with SPFAs. Downlink macro-diversity control data 214 includes, e.g., parameters, status information, and/or other information relating to operation of downlink macro-diversity control. In particular, the downlink macro-diversity control data 214 may include configuration information (e.g., information about maximum number of simultaneous connections supported or limits on frequency of downlink switching) and operational information (e.g., information about current processing state, status of pending signal responses, etc). The downlink macro-diversity control module 212 may access and/or modify the downlink macro-diversity control data 214.

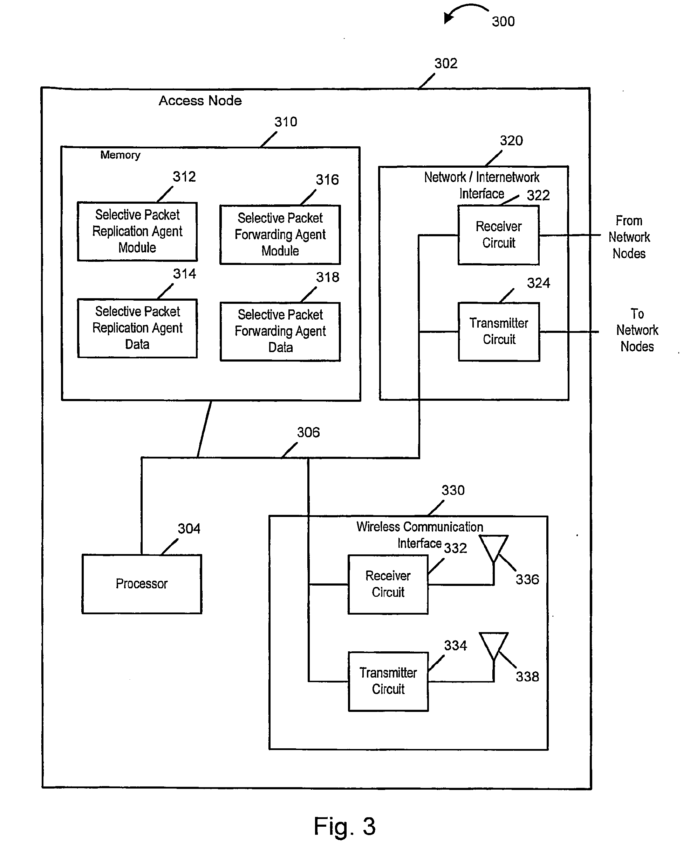

Fig. 3 provides a detailed illustration of an exemplary access node 300 implemented in accordance with the present invention. The exemplary access node 300, depicted in Fig. 3, is a detailed representation of an apparatus that may be used as any one of the access nodes 130, 140, 150, depicted in Fig. 1. In the Fig. 3 embodiment, the access node 300 includes a processor 304, a network/internetwork interface 320, a wireless communication interface 330 and memory 310, coupled together by a bus 306. Accordingly, via bus 306 the various components of the access node 300 can exchange information, signals and data. The components 304, 306, 310, 320, 330 of the access node 300 are located inside a housing 302.

The network/internetwork interface 320 provides a mechanism by which the internal components of the access node 300 can send and receive signals to/from external devices and network nodes. The network/internetwork interface 320 includes, a receiver circuit 322 and a transmitter circuit 324 used for coupling the node 300 to other network nodes, e.g., via copper wires or fiber optic lines. The wireless communication interface 330 also provides a mechanism by which the internal components of the access node 300 can send and receive signals to/from external devices and network nodes, e.g., end nodes. The wireless communication interface 330 includes, e.g., a receiver circuit 332 with a corresponding receiving antenna 336 and a transmitter circuit 334 with a corresponding transmitting antenna 338 used for coupling the access node 300 to other network nodes, e.g., via wireless communication channels.

The processor 304 under control of various modules, e.g., routines, included in memory 310 controls operation of the access node 300 to perform various signaling and processing tasks, as discussed below. The modules included in memory 310 are executed on startup or as called by other modules. Modules may exchange data, information, and signals when executed. Modules may also share data and information when executed. In the Fig 3 embodiment, the memory 310 of the access node 300 of the present invention includes an SPRA module 312 with corresponding SPRA data 314, and an SPFA module 316 with corresponding SPFA data 318.

The SPRA module 312 controls the operation of the access node 300 to support SPRA functionality for an end node capable of controlling downlink macro-diversity using multiple simultaneous link-layer connections such as the exemplary end node 200. The SPRA module 312 controls the processing of received signals, e.g., messages, from other network nodes and/or modules, as necessary to control, e.g., start or stop, selective replication of packet flows and direct replicated packet flows via separate paths, e.g., via tunneling, in route to the final destination. The SPRA module 312 also controls the processing of received signals, e.g., messages, from other network nodes destined for associated end nodes, as necessary for classification and filtering to determine whether packet replication is required. The SPRA data 314 includes, e.g., end node identifiers, parameters, filtering information, and/or other information relating to providing SPRA functionality as described herein. The SPRA module 312 may access and/or modify the SPRA data 314.

The SPFA module 316 controls the operation of the access node 300 to support SPFA functionality for an end node capable of controlling downlink macro-diversity using multiple simultaneous link-layer connections such as the exemplary end node 200. The SPFA module 316 controls the processing of received signals, e.g., messages, from other network nodes and/or modules, as necessary to control, e.g., start or stop, selective forwarding of replicated packet flows. The SPFA module 316 also controls the processing of received signals, e.g., messages, from other network nodes destined for associated end nodes, as necessary for classification and filtering to determine whether packets should be forwarded, buffered, or discarded. The SPFA data 318 includes, e.g., end node identifiers, parameters, filtering information, and/or other information relating to providing SPFA functionality as described herein. The SPFA module 316 may access and/or modify the SPFA data 318.

The access node 300 is capable of independently providing SPRA and SPFA functionality. Thus, with respect to a packet flow, or set of packet flows, traversing the access node 300 en route to a particular destination, the access node 300 may be an SPRP, an SPFP, or both an SPRP and an SPFP.

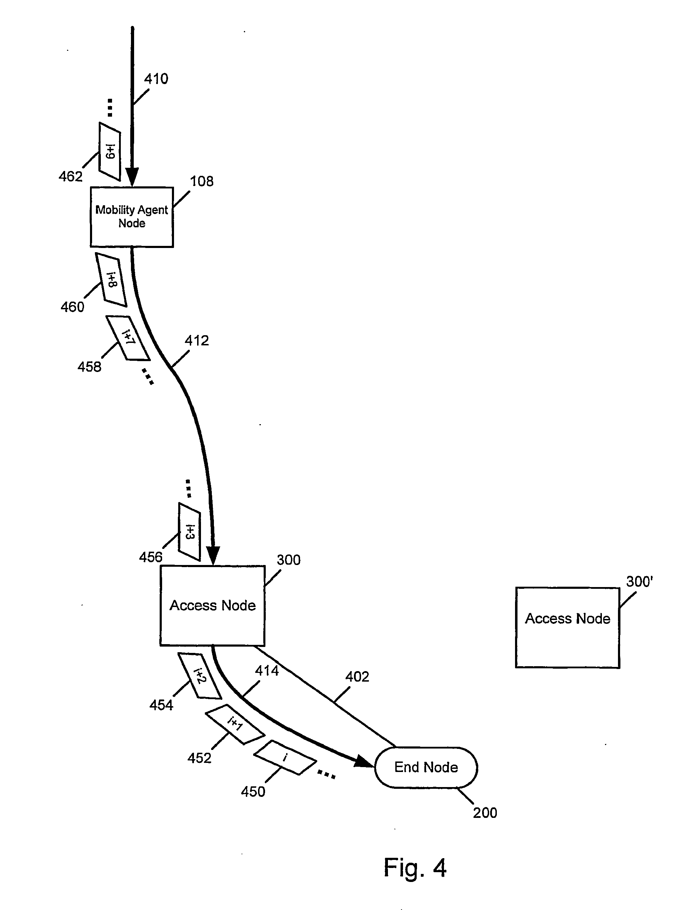

Figs. 4, 5, 6, 7 and 8 illustrate the operation of downlink macro-diversity performed in accordance the present invention in the context of the exemplary communication system 100. As compared with Fig. 1, the illustrations in Figs. 4-8 are more logical in nature rather than physical, so only a relevant sub-set of the nodes in the exemplary communication system 100 are depicted, thus, many of the physical nodes and links have been omitted. Where signaling, or delivery of packets, is shown between two entities, it is assumed that such signals, or packets, are transported as needed via intermediate nodes and/or links physically interconnecting the two entities. The illustrations in Figs. 4-8 include the mobility agent node 108, two access nodes 300, 300' implemented in accordance with the invention, and a single end node 200 implemented in accordance with the invention. The end node 200 and access nodes 300, 300' shown in Figs. 4-8 are simplified representations of those depicted in Figs. 2 and 3, respectively.

Fig. 4 illustrates a scenario without downlink macro-diversity as a baseline for comparison. In the Fig. 4 example, the end node 200 is connected via a first access link 402 to a first access node 300. Fig. 4 also depicts a sequence of packets 450, 452, 454, 456, 458, 460, 462 with sequence numbers *i* to *i*+*9*, being part of a packet flow destined for the end node 200.
The source of the packets 450, 452, 454, 546, 458, 460, 462 could be any other node in the exemplary communication system 100. The solid arrows 410, 412, 414 depict the path taken by the packets 450, 452, 454, 546, 458, 460, 462 as directed by routing information for the end node 200. Thus, the packets 450, 452, 454, 546, 458, 460, 462 traverse through the mobility agent node 108 and the first access node 300, from which they are delivered to the end node 200 via the first access link 402.

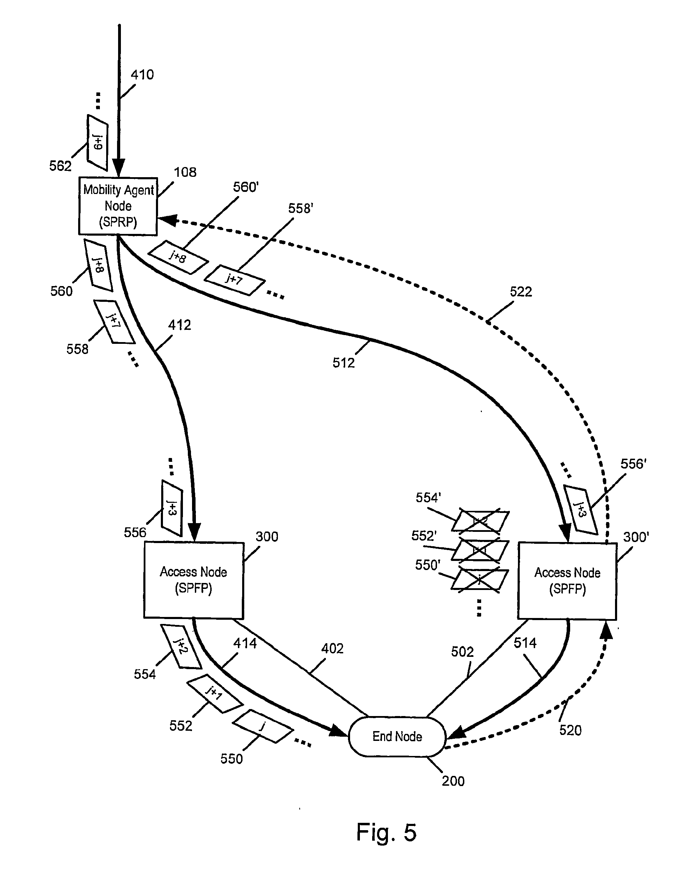

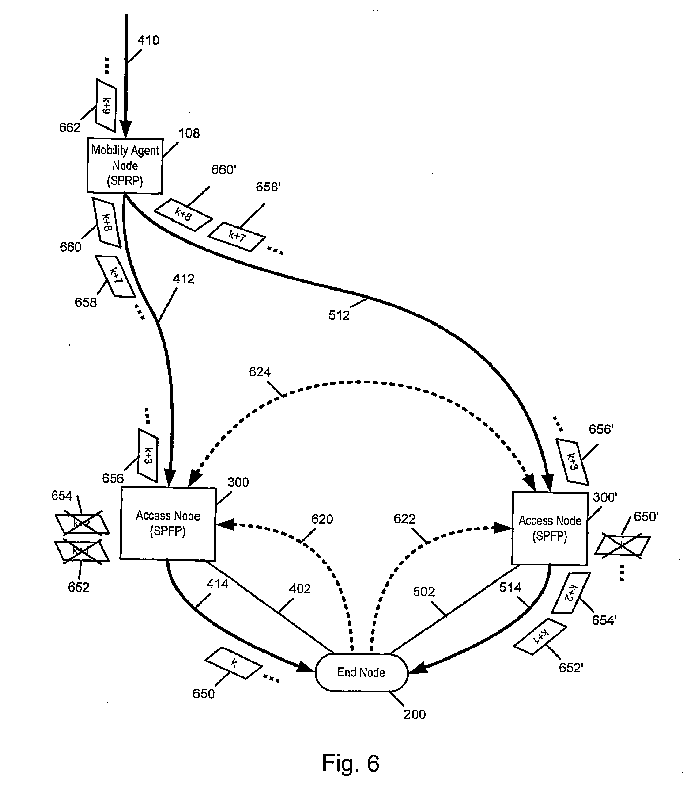

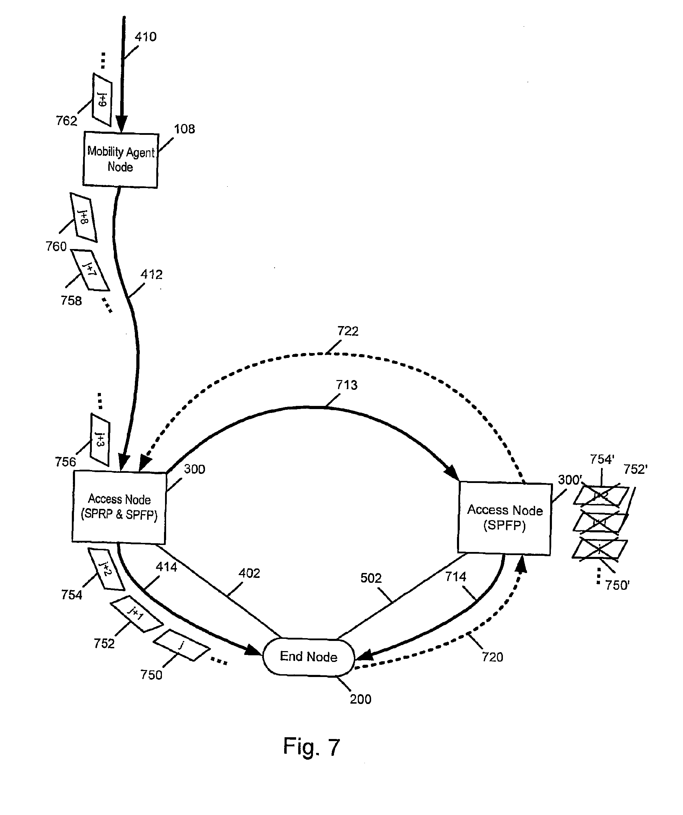

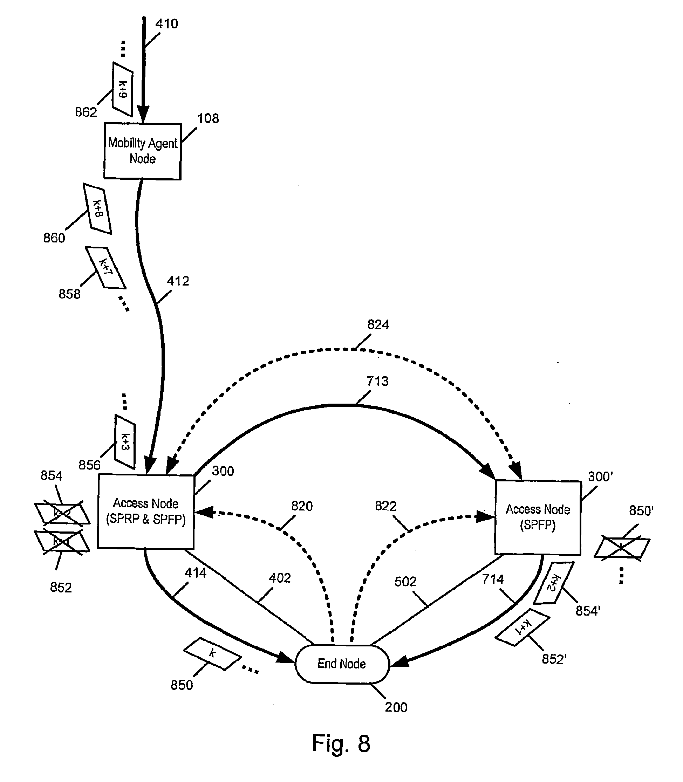

Figs. 5-8 illustrate various aspects of downlink macro-diversity. Figs. 5 and 6 illustrate a first embodiment, while Figs. 7 and 8 illustrate a second embodiment. Prior to detailing the unique aspects of these two embodiments, the following describes features of the invention that are applicable to both embodiments will first be described. In accordance with the present invention, the end node 200 periodically monitors received signals from one or more access nodes and uses this information to determine if it should establish, maintain, or tear down a link-layer connection with a particular access node. In one embodiment, the end node 200 uses a set of configurable parameters such as, but not limited to, pilot power, pilot power averaging time duration, minimum end node transmit power required, impact on inter-cell interference, etc. as input factors for controlling link-layer connectivity. The end node 200 generally strives to maintain one or more access links, e.g., link-layer connections with one or more access nodes, as needed to provide reliable access to the network with sufficient resilience to dynamic channel conditions. Over time, as signals are received from different access nodes, the end node 200 establishes, maintains or tears down link-layer connections as dictated by the controlling parameters in order to maintain a suitable set of access links. The number of simultaneous link-layer connection is subject to the hardware and software limitations of the end node 200. In general, both the end node 200 and access nodes 300, 300' may limit the number of link-layer connections.

In Figs. 5-8, the end node 200 is depicted with a plurality of link-layer connections, e.g., one via a first access link 402 to a first access node 300 and another via a second access link 502 to a second access node 300'. Note that while the examples depict a scenario with two link-layer connections 402, 502 to two different access nodes 300, 300', the invention is more widely applicable to scenarios where there are two or more link-layer connections with one or more access nodes.

To enable the exchange of link-layer data messages (and thus higher layer traffic), the end node 200 and access nodes 300, 300' perform the necessary operations to progress the access links 402, 502 up to and through the link layer exchange stage as previously discussed. This may be done using known techniques. The details regarding how this is accomplished are link-layer specific and will not be described herein since known methods may be used. However, in order for the end node 200 to establish multiple simultaneous link-layer connections, e.g., access links 402, 502, it may be necessary for the end node 200 to independently exchange link-layer control messages with multiple entities, e.g. access nodes 300, 300'. Furthermore, the end node 200 should be able to direct control messages to a specific entity, e.g. access node, as needed.

It is assumed that each of the access links 402, 502 is capable of supporting bi-directional exchange of link-layer data messages and higher layer traffic (such as IP datagrams), although not necessarily at every instant in time. Channel conditions, spatial relationships, and other time varying dynamic factors may impede the ability to exchange link-layer messages (and thus higher layer traffic) in one or both directions at any instant in time. Typically the physical, MAC, and link layers provide some ability to adapt to and persist through some degree of such dynamics without tearing down and re-establishing the link-layer connection. Thus, for the purpose of describing this invention, a bi-directional link-layer connection can be viewed as comprising two unidirectional link-layer connections, where the ability to send traffic in either direction may vary as a function of time. When a distinction is required or useful for explaining the invention we will refer to the connection directed from the end node to the access node as the "uplink" and the connection directed from the access node to the end node as the "downlink".

In accordance with the present invention, the end node 200 monitors the status of the available access links 402, 502 to determine the preferred link for transporting uplink and downlink traffic. Note that the preferred uplink and preferred downlink may be independently selected and thus may differ at any point in time. In a connectionless packet-switched network, the end node 200 can selectively forward uplink traffic over the set of available access links 402, 502, on a very rapid time scale to accommodate the physical and link layer dynamics. However, forwarding of downlink traffic destined for the end node 200 is typically directed based on routing information maintained by nodes in the network infrastructure, e.g., the access nodes 300, 300' and/or the mobility agent node 108. The latency of control loops and signaling associated with dynamically adapting or re-configuring the corresponding routing information for downlink traffic using traditional techniques, would typically exceed the time scale of physical and link layer dynamics. The innovations of the present invention enable selective downlink forwarding over the set of access links 402, 502 on a very rapid time scale to accommodate the physical and link layer dynamics, e.g., fast fading.

Figs. 5 and 6 further illustrate the operation of downlink macro-diversity in accordance with a first exemplary embodiment. In this first exemplary embodiment of the present invention, the mobility agent node 108 is the SPRP and each access node 300, 300' is an SPFP. Prior to commencing use of downlink macro-diversity, it is assumed that the current state or routing information is such that packets destined for the end node 200 are directed to the first access node 300, from which they are delivered to the end node 200 via the first access link 402, e.g., along the path denoted by solid arrows 410, 412, 414. Based, in part, on analysis of received signals from the access nodes, as previously described, the end node 200 initiates the establishment of a second access link 502 via the second access node 300'.

Upon establishment of the second access link 502, the end node 200 directs a signal 520 to the second access node 300' to initiate the operation of selective packet replication from the mobility agent node 108, the SPRP, to the second access node 300', as illustrated in Fig. 5. The signal 520 sent by the end node 200 is received and processed by the SPFA module 316' in the second access node 300'. The received signal 520 includes information to control the configuration and operation of the second access node 300' as an SPFP for a replicated flow of packets from an indicated SPRP, e.g., the mobility agent node 108. The received signal 520 may, and in some embodiments does, include configuration information relating to the initial operation of the SPFP, e.g., flow identification parameters, packet filtering information, and/or initial selective forwarding behavior, as well as other configuration information relating to the initial operation of the SPRP, e.g., flow identification parameters, packet filtering information, and/or initial selective replication behavior, which will be relayed in a subsequent signal to the SPRP. As part of processing the received signal 520, the SPFA module 316' in the second access node 300' directs a signal 522 to the SPRP indicated in the received signal 520, e.g., the mobility agent node 108, as illustrated in Fig. 5.

The signal 522 sent by the second access node 300' is received and processed by the mobility agent node, which in this case provides SPRA functionality. The received signal 522 includes information to control the configuration and operation of the mobility agent node 108 as an SPRP to replicate a flow of packets and direct the replicated flow of packets to an indicated SPFP, e.g., the second access node 300'. The received signal 522 may, and in some embodiments does, include configuration information relating to the initial operation of the SPRP, e.g., flow identification parameters, packet filtering information, and/or initial selective replication behavior, including information relayed from the signal 520 between the end node 200 and the second access node 300'. As part of processing the received signal 522 from the second access node 300', the mobility agent node 108 commences replicating a flow of packets matching some specific criteria and directing the replicated flow of packets to the second access node 300', e.g. via encapsulation or tunneling.

Thus, the signals 520, 522 depicted in Fig. 5 collective establish the necessary routing information to enable replicated packets destined for the end node 200 to be directed to the second access node 300', from which they can be delivered to the end node 200 via the second access link 502, e.g., along the path denoted by solid arrows 512, 514. The criteria for identification of packets to be replicated at the SPRP, which may have been either preconfigured in the mobility agent node 108 or configured in accordance with information provided in the received signal 522, can be based on a variety of known packet classification and filtering techniques, e.g., matching a set of packet header fields. Given the flexibility of this approach, the replicated packet flow could comprise, for example, all packets destined for the end node 200 or only a subset of such packets, e.g., the packets associated with a particular Voice over IP (VoIP) call. Similarly, the criteria for identification of packets to be forwarded by the SPFA modules 316, 316' at the SPFPs, which may have been either preconfigured in the SPFA data 318, 318' of the respective access nodes 300 300' or configured in accordance with information provided in the received signal 520, can be based on a variety of known packet classification and filtering techniques, e.g., matching a set of packet header fields.

Fig. 5 also depicts a sequence of packets (550, 550'), (552, 552'), (554, 554'), (556, 556'), (558, 558'), (560, 560'), 562 with sequence numbers *j* to *j*+*9*, being part of a packet flow destined for the end node 200. Note that the prime symbol (') is used to distinguish the replicated copy of a packet from the original copy of the same packet. The source of the packets (550, 550'), (552, 552'), (554, 554'), (556, 556'), (558, 558'), (560, 560'), 562 could be any other node in the exemplary communication system 100. In accordance with routing information maintained by other network nodes in the exemplary communication system 100, packets destined for the end node 200 are directed to the mobility agent node 108, e.g., see packet 562 with sequence number *j*+*9*. Upon reception by the mobility agent node 108, the SPRP, packets destined for end node 200 are inspected, e.g., classified or filtered, to determine if they match the criteria for selective packet replication. Packets matching the specific criteria are replicated and forwarded in parallel to both the first and second access nodes 300, 300', the SPFPs, e.g., see packets (550, 550'), (552, 552'), (554, 554'), (556, 556'), (558, 558'), (560, 560') with sequence numbers *j* to *j*+*8*. Packet forwarding between the SPRP and SPFPs can be accomplished via any known means, e.g., encapsulation and tunneling or native hop-by-hop routing.

The SPFA modules 316, 316' in the respective access nodes 300, 300' inspect, e.g., classify or filter, packets destined for end node 200 to determine if they match the criteria for selective packet forwarding, e.g., as specified in the corresponding SPFA data 318, 318'. Based on configuration information, e.g., in the SPFA data 318, 318', and/or the present operational state of the SPFA module 316, 316', packets destined for the end node 200 may be either forwarded from the access node 300, 300' over the corresponding access link 402, 502, buffered, or discarded. Note that, in the Fig. 5 example, the first access node 300 forwards packets 550, 552, 554 with sequence numbers *j* to *j*+*2* over access link 402, while the second access node 300' discards the replicated copies 550' 552' 554' of the same packets, as represented in Fig. 5 by an X being positioned over packets 550', 552' and 554'. This illustrates a scenario where the initial behavior of the SPFA module 316' in the second access node 300' is to discard the replicated flow of packets.

Fig. 6 illustrates signaling and operations associated with switching the preferred downlink, over which packets destined for the end node 200 should be delivered. Initially in the Fig 6 example, the state of the network and its nodes, e.g., the mobility agent node 108, the access nodes 300, 300' and the end node 200, is basically the same as in the Fig. 5 example. Fig. 6 also depicts a sequence of packets (650, 650'), (652, 652'), (654,654'), (656, 656'), (658, 658'), (660, 660'), 662 with sequence numbers *k* to *k*+*9*, being part of a packet flow destined for the end node 200. As in Fig. 5, packets matching the specified criteria are replicated by the mobility agent node 108, the SPRP, and forwarded in parallel to both the first and second access nodes 300, 300', the SPFPs, e.g., see packets (650, 650'), (652, 652'), (654, 654'), (656, 656'), (658, 658'), (660, 660') with sequence numbers *k* to *k*+*8*. However, Fig. 6 also illustrates a change in the selective forwarding behavior of the SPFA modules 316, 316' in the respective access nodes 300, 300', as controlled by the downlink macro-diversity control module 212 in the end node 200.

The SPFA module 316 in first access node 300 forwards the packet 650 with sequence number *k*, while the SPFA module 316' in the second access node 300' discards the replicated copy 650' of the same packet. Following transmission of the packet 650 with sequence number *k* by the first access node 300, the downlink macro-diversity control module 212 in the end node 200 initiates a switch of the preferred downlink. The downlink macro-diversity control module 212 may make this determination based on a variety of factors as previously described herein. Upon making the determination to switch the preferred downlink over which the flow of packets should be delivered, the downlink macro-diversity control module 212 in the end node 200 directs signals 620, 622 to the access nodes 300, 300', the SPFPs, to indicate the desired change in selective forwarding behavior. In some embodiments, the downlink macro-diversity control module 212 in the end node 200 may send signals 620, 622 directly to either one or both of the access nodes 300, 300'. In some alternative embodiments of the present invention, the SPFA modules 316, 316' in the respective access nodes 300, 300' may exchange signals 624 over the network infrastructure to coordinate the change in selective forwarding behavior. In any case, the signals are received and processed by the SPFA modules 316, 316' in the respective access nodes 300, 300' and provide an indication regarding whether a particular flow of packets should subsequently be forwarded from the access node 300, 300' over the corresponding access link 402, 502, buffered, or discarded.

In the Fig. 6 example, upon receiving a signal, e.g., either 620 or 624, indicating the desired change in the selective forwarding behavior, the SPFA module 316 in the first access node 300, begins discarding packets 652, 654 from the particular flow. Correspondingly, upon receiving a signal, e.g., either 622 or 624, indicating the desired change in the selective forwarding behavior, the SPFA module 316' in the second access node 300', begins forwarding packets 652', 654' to the end node 200 over the corresponding access link 502. Thus, while the end node 200 receives the packet 650 with sequence number *k* from the first access node 300 via the first access link 402, the packets 652', 654' with sequence numbers *k*+*1* and *k*+*2* are received from the second access node 300' via the second access link 502. In the absence of subsequent changes in the selective forwarding behavior, replicated copies of subsequent packets in the flow, e.g., 656', 658', 660', will also be delivered from the second access node 300' via the second access link 502.

In some embodiments of the present invention, signals 620, 622, 624 indicating the change in selective forwarding behavior, include additional information to minimize duplicate delivery and/or loss of packets within the flow. In one particular embodiment of the present invention, the signals 620, 622, 624 include packet sequence identification information, e.g., a value of the identification field in an IP header or a sequence number in a Real Time Protocol (RTP) header, indicating the last packet to be delivered over the previous preferred downlink and/or the next packet to delivered over the new preferred downlink.

Figs. 7 and 8 further illustrate the operation of downlink macro-diversity in accordance with a second exemplary embodiment. In this second exemplary embodiment of the present invention, the first access node 300 is the SPRP, where one copy of each replicated packet is directed to the end node 200 via the first access link 402 and a second copy of each replicated packet is directed to the second access node 300' for delivery to the end node 200 via the second access link 502. Each access node 300, 300' also operates as an SPFP controlling delivery of packets over its respective access links 402, 502. Thus, in the exemplary scenario depicted in Figs. 7 and 8, the first access node 300 is both the SPRP and an SPFP, while the second access node is only an SPFP. Prior to commencing use of downlink macro-diversity, it is assumed that the current state or routing information is such that packets destined for the end node 200 are directed to the first access node 300, from which they are delivered to the end node 200 via the first access link 402, e.g., along the path denoted by solid arrows 410, 412, 414. Based, in part, on analysis of received signals from the access nodes, as previously described, the end node 200 initiates the establishment of a second access link 502 via the second access node 300'.

Upon establishment of the second access link 502, the end node 200 directs a signal 720 to the second access node 300' to initiate the operation of selective packet replication from the first access node 300, the SPRP, to the second access node 300', as illustrated in Fig. 7. The signal 720 sent by the end node 200 is received and processed by the SPFA module 316' in the second access node 300'. The received signal 720 includes information to control the configuration and operation of the second access node 300' as an SPFP for a replicated flow of packets from an indicated SPRP, e.g., the first access node 300. The received signal 720 may include configuration information relating to the initial operation of the SPFP, e.g., flow identification parameters, packet filtering information, and/or initial selective forwarding behavior, as well as other configuration information relating to the initial operation of the SPRP, e.g., flow identification parameters, packet filtering information, and/or initial selective replication behavior, which will be relayed in a subsequent signal to the SPRP. As part of processing the received signal 720, the SPFA module 316' in the second access node 300' directs a signal 722 to the SPRP indicated in the received signal 720, e.g., the first access node 300, as illustrated in Fig. 7.

The signal 722 sent by the second access node 300' is received and processed by the SPRA module 312 in the first access node 300. The received signal 722 includes information to control the configuration and operation of the first access node 300 as an SPRP to replicate a flow of packets and direct the replicated flow of packets to an indicated SPFP, e.g., the second access node 300'. The received signal 722 may, and in some embodiments does, include configuration information relating to the initial operation of the SPRP, e.g., flow identification parameters, packet filtering information, and/or initial selective replication behavior, including information relayed from the signal 720 between the end node 200 and the second access node 300'. As part of processing the received signal 722 from the second access node 300', the first access node 300 commences replicating a flow of packets matching some specific criteria and directing the replicated flow of packets to the second access node 300', e.g. via encapsulation or tunneling.

Thus, the signals 720, 722 depicted in Fig. 7 collectively establish the necessary routing information to enable replicated packets destined for the end node 200 to be directed to the second access node 300', from which they can be delivered to the end node 200 via the second access link 502, e.g., along the path denoted by solid arrows 713, 714. The criteria for identification of packets to be replicated at the SPRP, which may have been either preconfigured in the SPRA data 314 of the first access node 300 or configured in accordance with information provided in the received signal 722, can be based on a variety of known packet classification and filtering techniques, e.g., matching a set of packet header fields. Given the flexibility of this approach, the replicated packet flow could comprise, for example, all packets destined for the end node 200 or only a subset of packets, e.g., the packets associated with a particular Voice over IP (VoIP) call. Similarly, the criteria for identification of packets to be forwarded by the SPFA modules 316, 316' at the SPFPs, which may have been either preconfigured in the SPFA data 318, 318' of the respective access nodes 300 300' or configured in accordance with information provided in the received signal 720, can be based on a variety of known packet classification and filtering techniques, e.g., matching a set of packet header fields.

Fig. 7 also depicts a sequence of packets (750, 750'), (752, 752'), (754, 754'), 756, 758, 760, 762 with sequence numbers *j* to *j*+*9*, being part of a packet flow destined for the end node 200. The source of the packets (750, 750'), (752, 752'), (754, 754'), 756, 758, 760, 762, could be any other node in the exemplary communication system 100. In accordance with routing information maintained by other network nodes in the exemplary communication system 100, packets destined for the end node 200 are directed to the mobility agent node 108 and then to the first access node 300, e.g., see packets 756, 758, 760, 762 with sequence number j+*3* to j+*9*. Upon reception by the first access node 300, the SPRP, packets destined for end node 200 are inspected, e.g., classified or filtered, to determine if they match the criteria for selective packet replication. Packets matching the specific criteria are replicated and forwarded in parallel to the SPFA modules 316, 316' in both the first and second access nodes 300, 300', e.g., see packets (750, 750'), (752, 752'), (754, 754') with sequence numbers *j* to *j*+*2*. Packet forwarding between the first access node 300 and second access node 300' can be accomplished using various known techniques, e.g., encapsulation and tunneling or native hop-by-hop routing.

The SPFA modules 316, 316' in the respective access nodes 300, 300' inspect, e.g., classify or filter, packets destined for end node 200 to determine if they match the criteria for selective packet forwarding, e.g., as specified in the corresponding SPFA data 318, 318'. Based on configuration information, e.g., in the SPFA data 318, 318', and/or the present operational state of the SPFA module 316, 316', packets destined for the end node 200 may be either forwarded from the access node 300, 300' over the corresponding access link 402, 502, buffered, or discarded. Note that, in the Fig. 7 example, the first access node 300 is forwarding packets 750, 752, 754 with sequence numbers *j* to *j*+*2* over access link 402, while the second access node 300' discards the replicated copies 750', 752', 754' of the same packets. This illustrates a scenario where the initial behavior of the SPFA module 316' in the second access node 300' is to discard the replicated flow of packets.

Fig. 8 illustrates signaling and operations associated with switching the preferred downlink, over which packets destined for the end node 200 should be delivered. Initially in the Fig 8 example, the state of the network and its nodes, e.g., the mobility agent node 108, the access nodes 300, 300' and the end node 200, is basically the same as in the Fig. 7 example. Fig. 8 also depicts a sequence of packets (850, 850'), (852, 852'), (854, 854'), 856, 858, 860, 862 with sequence numbers *k* to *k*+*9*, being part of a packet flow destined for the end node 200. As in Fig. 7, packets matching the specified criteria are replicated by the first access node 300, the SPRP, and forwarded in parallel to the SPFA modules 316, 316' in the both the first and second access nodes 300, 300', e.g., see packets (850, 850'), (852, 852), (854, 854') with sequence numbers *k* to *k*+*2*. However, Fig. 8 also illustrates a change in the selective forwarding behavior of the SPFA modules 316, 316' in the respective access nodes 300, 300', as controlled by the downlink macro-diversity control module 212 in the end node 200.

The SPFA module 316 in first access node 300 forwards the packet 850 with sequence number *k*, while the SPFA module 316' in the second access node 300' discards the replicated copy 850' of the same packet. Following transmission of the packet 850 with sequence number *k* by the first access node 300, the downlink macro-diversity control module 212 in the end node 200 initiates a switch of the preferred downlink. The downlink macro-diversity control module 212 may, and in some embodiments does, make this determination based on a variety of factors as previously described herein. Upon making the determination to switch the preferred downlink over which the flow of packets should be delivered, the downlink macro-diversity control module 212 in the end node 200 directs signals 820, 822 to the access nodes 300, 300', the SPFPs, to indicate the desired change in selective forwarding behavior. In some embodiments, the downlink macro-diversity control module 212 in the end node 200 may send signals 820, 822 directly to either one or both of the access nodes 300, 300'. In some alternative embodiments of the present invention, the SPFA modules 316, 316' in the respective access nodes 300, 300' may exchange signals 824 over the network infrastructure to coordinate the change in selective forwarding behavior. The signals are received and processed by the SPFA modules 316, 316' in the respective access nodes 300, 300' and provide an indication regarding whether a particular flow of packets should subsequently be forwarded from the access node 300, 300' over the corresponding access link 402, 502, buffered, or discarded.

In the Fig. 8 example, upon receiving a signal, e.g., either 820 or 824, indicating the desired change in the selective forwarding behavior, the SPFA module 316 in the first access node 300, begins discarding packets 852, 854 from the particular flow. Correspondingly, upon receiving a signal, e.g., either 822 or 824, indicating the desired change in the selective forwarding behavior, the SPFA module 316' in the second access node 300', begins forwarding packets 852', 854' to the end node 200 over the corresponding access link 502. Thus, while the end node 200 receives the packet 850 with sequence number *k* from the first access node 300 via the first access link 402, the packets 852', 854' with sequence numbers *k*+*1* and *k*+*2* are received from the second access node 300' via the second access link 502. In the absence of subsequent changes in the selective forwarding behavior, replicated copies of subsequent packets in the flow will also be delivered from the second access node 300' via the second access link 502.

In some embodiments of the present invention, signals 820, 822, 824 indicating the change in selective forwarding behavior include additional information to minimize duplicate delivery and/or loss of packets within the flow. In one particular embodiment of the present invention, the signals 820, 822, 824 include packet sequence identification information, e.g., a value of the identification field in the IP header or a sequence number in a Real Time Protocol (RTP) header, indicating the last packet to be delivered over the previous preferred downlink and/or the next packet to delivered over the new preferred downlink.

In some embodiments of the present invention, communications between nodes is based all, or in part, on IP internetworking. Thus, communication of both data and/or control signaling between the network nodes may use IP packets, e.g., datagrams. In embodiments of the present invention that utilize IP packets, said IP packets may be delivered to the intended destination nodes using either unicast or multicast addressing and delivery mechanisms. The use of IP multicast is particularly useful when the same information is sent from one node to a plurality of other nodes. In cases where the same information, e.g., packet payload data, is sent to a plurality of targeted nodes using unicast delivery, a separate IP packet with a copy of the information is sent by the source node to each targeted node. Alternatively, when the same information is sent to a plurality of targeted nodes using multicast delivery, a single IP packet with the information is sent by the source node and network nodes replicate the packet as required for delivery to each targeted node. Thus, IP multicast provides a more efficient method of delivering information from a source node to a group of destination nodes. In some embodiments of the present invention, IP multicast is used for delivery of replicated packet flows between the SPRP and one or more SPFPs. In such embodiments, the SPRP may not actually replicate the packets matching the specified criteria, but instead encapsulate packets matching the particular flow with an additional IP header destined to a particular IP multicast group and forward the encapsulated packets based on IP multicast routing information. Correspondingly, in such embodiments, the SPFPs join the particular IP multicast group to receive copies of the encapsulated packets.

Various features of the present invention are implemented using modules. Such modules may be implemented using software, hardware or a combination of software and hardware. Many of the above described methods or method steps can be implemented using machine executable instructions, such as software, included in a machine readable medium such as a memory device, e.g.., RAM, floppy disk, etc. to control a machine, e.g., general purpose computer with or without additional hardware, to implement all or portions of the above described methods. Accordingly, among other things, the present invention is directed to a machine-readable medium including machine executable instructions for causing a machine, e.g., processor and associated hardware, to perform one or more of the steps of the above-described method(s).

Numerous additional variations on the methods and apparatus of the present invention described above will be apparent to those skilled in the art in view of the above description of the invention. Such variations are to be considered within the scope of the invention. The methods and apparatus of the present invention may be used with CDMA, orthogonal frequency division multiplexing (OFDM), or various other types of communications techniques which may be used to provide wireless communications links between access nodes and mobile nodes. Accordingly, in some embodiments the access nodes are implemented as base stations which establish communications links with mobile nodes using OFDM or CDMA. In various embodiments the mobile nodes are implemented as notebook computers, personal data assistants (PDAs), or other portable devices including receiver/transmitter circuits and logic and/or routines, for implementing the methods of the present invention.

### FURTHER SUMMARY OF THE INVENTION

1. A communications method comprising:
   operating an end node to maintain multiple communications links, a first one of said communications links being between a first access node and said end node; and
   controlling which one of said multiple communications links is used to transmit packets to said end node at any given time.
2. The method of 1, wherein said end node controls which one of said multiple communications links is used, the method further comprising:
   operating the end node to transmit a signal to said first access node to control said first access node to transmit packets to said end node using said first communications link.
3. The method of 2, further comprising:
   operating the end node to send a signal to said first access node to prevent the transmission of packets to said end node over the first communications link for at least a portion of time during which packets are being received by said end node via said second communications link.
4. The method of 3,
   wherein said first and second communications links are both between said first access node and the end node; and
   wherein said first access node transmits packets to said end node using one of said communications links at any given point in time.
5. The method of 3, wherein the second communications link is a communications link between a second access node and said end node, the method further comprising:
   sending a first stream of packets directed to said end node to the first access node; and
   sending a duplicate stream of packets to said second access node, the duplicate stream of packets including at least one packet having a payload which is a duplicate of a payload of at least one packet in said first stream; and
   operating at least one of said first and second access nodes to discard at least some packets directed to the end node.
6. The method of 5, wherein during a first period of time packets from said first stream are transmitted to said end node over said first communications link and during a second period of time packets from the second stream are transmitted to said end node, the first and second periods of time being consecutive periods of time, at least some of the packets transmitted to said end node during said first and second periods of time being non-duplicative.
7. The method of 5, further comprising:
   operating a network node coupled to said first and second nodes to perform a duplication operation on a series of packets directed to said end node to generate said first and second streams of packets;
   routing the first stream of packets to said first access node; and
   routing the second stream of packets to said second access node.
8. The method of 7, further comprising the step of:
   operating the end node to reconstruct a single series of packets from packets received from said first and second communications links, the packets in said single series matching at least a portion of the series of packets duplicated to generate said first and second streams of packets.
9. The method of 1, wherein controlling which one of said multiple communications links is used to transmit packets to said end node at any given time is performed as a function of link state quality measurements.
10. The method of 9, wherein said end node controls which of said multiple communications links is used to communicate packets to said end node.
11. The method of 1, wherein said end node selects which of said multiple communications links is to be used at any point in time for transmission of packets to the end node based on link state quality information.
12. The method of 1, wherein said end node controls which one of said multiple communications links is used to transmit packets to said end node at any given time by transmitting at least one control signal to said first access node.
13. The method of 12, wherein a second one of said multiple communications links is between said end node and a second access node; and
   wherein said end node sends control signals to at least one access node to control which of said first and second communications links is used to transmit packets to said end node.
14. The method of 13, wherein said end node sends packet transmission control signals to at least two access nodes having communications links with said end node.
15. The method of 13, further comprising:
   operating a network node to duplicate packets directed to said end node to thereby generate first and second packet streams;
   communicating the first packet stream to said first access node;
   communicating the second packet stream to said second access node; and
   operating said first and second access nodes to discard packets transmitted to said end node by the other one of said first and second access nodes.
16. The method of 15, wherein the time required to transmit the control signal from the end node to the first access node is less than the time required to transmit packets from said network node which duplicates packets to said first access node.
17. The method of 16, wherein the time required to transmit the control signal from the end node to the second access node is less than the time required to transmit packets from said network node which duplicates packets to said second access node.
18. The method of 15, wherein the time required to transmit the control signal from the end node to the first access node is less than the time required to transmit packets from said network node which duplicates packets to said end node.
19. The method of 18, wherein the time required to transmit the control signal from the end node to the second access node is less than the time required to transmit packets from said network node which duplicates packets to said end node.
20. The method of 2, wherein said access node is a base station.
21. The method of 2,
   wherein said end node is a mobile device; and
   wherein said multiple communications links are wireless communications links.
22. The method of 21, wherein said communications links are OFDM communications links.
23. The method of 21, wherein said communications links are CDMA communications links.
24. The method of 21, wherein said access node is a base station.
25. The method of 7,
   wherein said network node is a router;
   wherein said access node is a base station; and
   wherein said end node is a portable notebook computer.
26. A communications system, comprising:
   an end node, said end node including:
      means for maintaining multiple communications links, a first one of said communications links being between a first access node and said end node; and
      means for controlling which one of said multiple communications links is used to transmit packets to said end node at any given time..
27. The communication system of 26, further comprising:
   said first access node; and
   a second access node, said first and second access nodes being coupled to said end node by first and second communications links, respectively, said second access node including means for discarding packets directed to said end node in response to a control signal from said end node indicating that packets are not to be transmitted to said end node.
28. The communications system of 27, wherein said first access node includes means for discarding packets directed to said end node in response to a control signal from said end node indicating that packets are not to be transmitted to said end node.
29. The communications system of 28, further comprising:
   a network node coupled to said first and second access nodes, the network node including:
      means for performing a duplication operation on a series of packets directed to said end node to generate first and second streams of packets, the second stream of packets including packets having payloads which are duplicates of the payloads of at least some packets in the first stream.
30. The communications system of 29,
   wherein said first access node is a first base station;
   wherein said second access node is a second base station;
   wherein said multiple communications links are wireless communications links; and wherein said end node is a mobile device.
31. The communications system of 30, wherein said network node is a router.

## Claims

1. A method by an infrastructure entity, comprising:
duplicating a series of packets as a plurality of duplicate packets; and
forwarding said duplicate packets to an end node, wherein one or more of the duplicate packets are discarded before they are forwarded to the end node.

2. The method as in claim 1 further comprising forwarding said duplicate packets to at least one other infrastructure entity prior to reaching said end node.

3. The method as in claim 2 further comprising partitioning said series of packets as a plurality of packet portions and duplicating said packet portions as a plurality of duplicate packet portions.

4. The method as in claim 1 further comprising partitioning said series of packets as a plurality of packet portions and duplicating said packet portions as a plurality of duplicate packet portions.

5. The method as in claim 1 wherein said duplicating said series of packets includes receiving said plurality of duplicate packets from another infrastructure entity.

6. The method as in claim 5 wherein said duplicate packets are duplicate packet portions of a series of packets.

7. An infrastructure entity, comprising:
means for duplicating a series of packets as a plurality of duplicate packets; and
means for forwarding said duplicate packets to an end node, wherein one or more of the duplicate packets are discarded before they are forwarded to the end node.

8. The infrastructure entity as in claim 7 further comprising means for forwarding said duplicate packets to at least one other infrastructure entity prior to reaching said end node.

9. The infrastructure entity as in claim 8 further comprising means for partitioning said series of packets as a plurality of packet portions and duplicating said packet portions as a plurality of duplicate packet portions.

10. The infrastructure entity as in claim 7 further comprising means for partitioning said series of packets as a plurality of packet portions and duplicating said packet portions as a plurality of duplicate packet portions.

11. The infrastructure entity as in claim 7 wherein said means for duplicating said series of packets includes means for receiving said plurality of duplicate packets from another infrastructure entity.

12. The infrastructure entity as in claim 11 wherein said duplicate packets are duplicate packet portions of a series of packets.

13. A computer-readable medium comprising instructions that are executable to perform the method of any of claims 1-6.
